# EUROPEAN PATENT APPLICATION

(11) **EP 4 177 058 A1**
(43) Date of publication of application: **10.05.2023**
(21) Application number: 22152507.4
(22) Date of filing: 20.01.2022
(51) Int. Cl.: B41F 17/24, B41F 17/00, B29C 45/14, H01Q 1/32, H01Q 1/44

(54) **METHOD FOR THE PRODUCTION OF LOGOTYPES**

(30) Priority: 05.11.2021 PT 2021117560
(71) Applicant: KLC Industria De Transformção De Matérials Plásticas, Lda, 2430-021 Marinha Grande (PT)
(72) Inventor: ROLDÃO COLAÇO, Pedro Miguel, 2430-021 MARINHA GRANDE (PT); AFONSO FERREIRA, Jorge Manuel, 2430-021 MARINHA GRANDE (PT)
(74) Representative: Pereira da Cruz, Joao

(57) **Abstract**

The present invention relates to a method for manufacturing logos, preferably applied in the automotive industry. This method comprises several stages starting with the logotype injection, followed by tampography of the inner side of the piece using tampography inks; after removal of any surface contamination, the pieces are placed inside the vacuum chamber in such a way that the areas exposed are only the ones intended to be coated by deposition and activation of the surface of the piece using plasma, and after the application of the metal the following techniques can be employed: in vacuum applying a SiOx Nitride layer of the metal; or using a water- or solvent-based protective paint with ultraviolet or thermal cure, or applying a second piece.

## Description

### SCOPE OF THE INVENTION

The logotype production methods meet, among others, the requirements of the automotive industry and use the following approach:
- Metallisation is carried out with resource to ecological techniques that do not include the concept of electrolytic deposition, which presents the problem of employing solutions with Cr III or Cr VI;
- The metallisation is performed on the inner side of the piece, using the piece itself as a protective shield against external aggressions;
- The PVD (Physical Vapour Deposition) layer is applied directly to the polymeric substrate without using base paints;
- Prior to the metal deposition, a layer of paint is applied to the areas required according to the logotype design;
- A polymer with high transparency and mechanical strength is used;
- The thickness of the PVD is adjusted to obtain metal layers that are transparent to light radiation so that logotypes can be created with backlighting;
- Indium deposition was used for metal layers with transparency to electromagnetic radiation, which enables the placement of radar transmitters/receivers for the new speed control systems in vehicles;
- The exposed surface of the polymer can be protected with scratch-resistant painting.

### BRIEF DESCRIPTION OF THE FIGURES

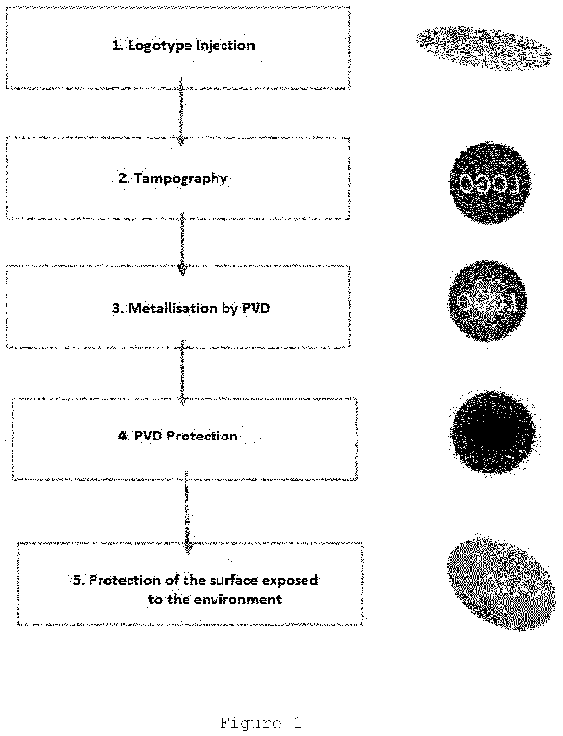

Figure 1 - Flowchart of the industrial process which is the object of the present invention.
Figure 2 - Representation of the simple logotype.
Figure 3 - Representation of the logotype with ultrasonic welded-base.
Figure 4 - Representation of the logotype with ultrasonic- and LED-welded base.

### DETAILED DESCRIPTION OF THE INVENTION

The present invention relates to a method for manufacturing logotypes, or just logos as hereinafter referred to, designed to be applied preferably in the automotive industry. This method comprises various stages and steps which are described below, starting with the injection of the logo. Comparatively to the state of the art, it is a simpler but effective process providing a longer-lasting adhesion of the logo.

It should be noted that a logo obtained by the injection process with the aid of an injection mould must have the following characteristics:
- Sufficient mechanical robustness to withstand the working pressures without causing burrs to the joint line;
- Moulding surfaces with the necessary finishing or polishing in order to meet the requirements and specifications of the product;
- Cavity steel of the DIN 1.2083 family or similar.

For the injection of the logo, crystalline materials suitable for the Physical Vapour Deposition process - henceforth designated by its acronym (PVD) - are used: Polycarbonate and/or Polyamide, preferably Polyamide 12. These materials are considered as suitable for PVD, since they do not degas during vacuum, in addition to not becoming easily yellowed during the processes that involve atmosphere with plasma. Additionally, they provide a good adhesion to the metallic layer deposited under PVD and the films obtained are homogeneous and, in case of very polished surfaces, they present high-gloss depositions.

Subsequently, there is the tampography step, in which the area to receive the tampography is the inner side of the piece. For the purposes of this technique, it is necessary to use tampography inks that are adequate to the process. The following inks were tested and approved: SP04, ref. SP041; SP04, ref. SP042; SP05, ref. SP051; SP06, ref. SP061; and/or SP03, ref. SP032.

The thickness of each layer of ink used in the tampography step ranges from 5 to 15 µm. This range of thicknesses is technically feasible by the tampography process, which leads to optimum results in subsequent processes and mechanical strength tests.

After tampography, it is necessary to ensure the complete cure of the painting systems, by placing the pieces:
- between 30 and 120 minutes at a temperature of approximately 80°C; or, alternatively
- at room temperature, defined in this context as above 22°C, for a minimum of 24 hours.

Both options ensure complete cure of the painting systems and evaporation of all solvents, as the release of solvents has been found to interact with the metallic layer causing cracking of the film.

Before placing the pieces inside the machine, one must remove any surface contamination using ionised air (power supply with 5 to 7 kV) and an air pressure of 3 to 7 bar. This cleaning has proved effective in removing dust and other non-greasy particles from the surface to be coated.

The supports of the pieces for deposition by PVD leave exposed only the areas to be coated with PVD. For this result to be possible, the method object of the present invention uses PVD by sputtering with targets of Chromium or Titanium or Indium.

Before metallisation, and when already in vacuum inside the chamber, the surface to receive the metal must be duly activated using plasma. This activation optimises the adherence of the film to the substrate and destroys slight organic contaminations such as grease, for instance:
- Atmosphere: Argon
- Pressure: 9×10⁻⁴mbar to 1×10⁻⁵mbar;
- Power: from 25% to 50% for a 5kV generator;
- Duration: from 60s to 360s.

After activation with the plasma, the metal deposition is started:
- Metal to be used in the targets: Chromium, Titanium, Aluminium or Indium;
- Atmosphere: Argon;
- Argon flow rate: from 100 to 300sccm;
- Reactive Gases: N₂, O₂ or defined mixtures between them;
- Reactive gases flow rate: from 0 to 200sccm;
- Pressure 9×10⁻⁴mbar to 1×10⁻⁵mbar
- Energy: 250 to 1250 kJ;
- Power: from 4 to 15 kW;
- Total metal thickness: 10 to 400nm for layers on black surfaces or without light transparency requirements; and
- Metal thickness for areas that have to be semi-transparent to light: 10 to 75nm. For the nominal value, the range of thickness variation should be less than 10nm.

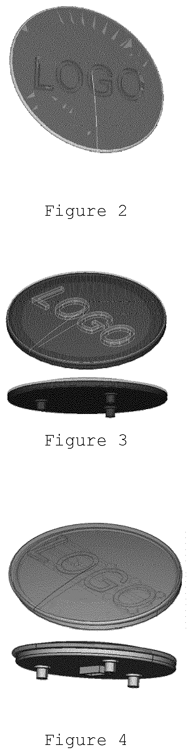

After the application of the metal, the following techniques can be used, depending on the final product desired:
- In vacuum and right after the deposition of the metal(s) a SiOx layer is applied using Hexamethyldisiloxane and plasma with a flow rate of 50 to 200 sccm and for a time interval from 60 to 150s - this technique is effective for coatings that are not going to be exposed to external aggressions, remaining protected by the assembly itself, as in the example of figure 2;
- In vacuum and right after the deposition of the metal(s), a Nitride layer of the deposited metal is applied using a reactive atmosphere with N₂ and plasma with a flow rate of 50 to 200 sccm and for a time interval from 60 to 150s - this technique is suitable for coatings that will not undergo external aggressions and that remain protected by the assembly itself. In ecological terms, this is the alternative to using siloxanes (previous paragraph);
- After deposition of the metal using a water-based or solvent-based protective paint with ultraviolet (UV) or thermal curing with thicknesses from 15 to 45 µm - this technique is suitable for coatings that will undergo temperature and humidity variations;
- Apply a second piece, which may already be equipped with the necessary electronics for backlighting or sensorization. This piece is ultrasonically welded to the logo in order to ensure sufficient tightness to pass automotive industry tests on outdoor pieces - this technique is suitable for pieces that will be outdoors, so the mechanical shielding on the inner surface of the piece is crucial. This shielding also serves, when necessary, to support and protect the electronic components, LEDs, RF sensors, among others, as shown in figures 3 and 4.

Should it be necessary to protect the surface exposed to the environment, a coat of varnish from one of the following manufacturers and with the following characteristics is applied: SP02, ref SP022 and/or SP03, ref SP033; and with a thickness between 15 and 35 µm.

As will be evident to a person skilled in the art, the present invention should not be limited to the embodiments described herein, with a number of changes being possible, which remain within the scope of this invention. Of course, the preferred embodiments above described are combinable in the different possible forms, the repetition of all such combinations being herein avoided.

## Claims

1. Method for producing logos comprising the following steps:
a. injection of the logo;
b. tampography on the inner side of the piece using tampography inks and the thickness of each ink layer used in the tampography step ranges from 5 to 15 µm;
c. removal of any surface contamination using ionised air;
d. placing the pieces inside the vacuum chamber in such a way that the areas exposed are only the ones intended to be coated by plasma deposition and activation of the surface of the piece;
e. metal deposition by physical vapour deposition through sputtering;
f. after the metal application, the following techniques may be used:
i. in vacuum applying a layer of:
1. SiOx using Hexamethyldisiloxane and plasma at a flow rate of 50 to 200 sccm and for a time interval from 60 to 150s; or
2. Nitride of the deposited metal using a reactive atmosphere with N2 and plasma with a flow rate of 50 to 200 sccm and a time interval from 60 to 150s;
ii. using a water-based or solvent-based ultraviolet or thermal curing protective paint with a thickness from 15 to 45 µm; or
iii. applying a second piece, this second piece whether or not equipped with the necessary backlighting or sensorization, and then ultrasonically welding the piece to the logo.

2. Method according to claim 1, wherein the step of injecting the logo crystalline materials are used.

3. Method according to the preceding claim, wherein the crystalline materials are Polycarbonate and/or Polyamide, preferably Polyamide 12.

4. Method according to the previous claims, wherein the inks in the tampography step are: SP04, ref. SP041; SP04, ref. SP042; SP05, ref. SP051; SP06, ref. SP061; and/or SP03, ref. SP032.

5. Method according to the previous claims, wherein after the tampography step, complete curing of the painting systems is performed by placing the pieces from 30 to 120 minutes at a temperature of about 80°C; or for at least 24h at room temperature.

6. Method according to the previous claims, wherein the step of removing any surface contaminations by using ionized air, a power supply with 5 to 7 kV and an air pressure with 3 to 7 bar are used.

7. Method according to the previous claims, wherein the metal deposition step the following conditions are provided:
a. Chromium or Titanium or Indium targets;
b. Atmosphere: Argon;
c. Argon flow rate: from 100 to 300sccm;
d. Reactive Gases: N₂, O₂ or defined mixtures between them;
e. Reactive gases flow rate: from 0 to 200sccm;
f. Pressure 9×10⁻⁴mbar to 1×10⁻⁵mbar
g. Energy: 250 to 1250 kJ;
h. Power: 4 to 15 kW;
i. Total metal thickness: 10 to 400nm for layers on black surfaces or without light transparency requirements; and
j. Metal thickness for areas that have to be semi-transparent to light: 10 to 75nm, for the nominal value, the range of thickness variation should be less than 10nm.

8. Method according to the previous claims wherein the method further comprises a step of protecting the surface exposed to the environment by applying a layer of varnish with a thickness from 15 to 35 µm.

9. Use of the method described in claims 1 to 8 for logos applied in the automotive industry.
